Europäisches Patentamt

**European Patent Office**

Office européen des brevets

(19)

(11) Veröffentlichungsnummer: **0 146 832**
**B1**

(12) ## EUROPÄISCHE PATENTSCHRIFT

(45) Veröffentlichungstag der Patentschrift:
**01.04.87**

(51) Int. Cl.⁴: **H 02 M 3/338**

(21) Anmeldenummer: **84114679.8**

(22) Anmeldetag: **03.12.84**

(54) Abschalteinrichtung für einen selbstschwingenden Sperrwandler.

(30) Priorität: **21.12.83 DE 3346265**

(43) Veröffentlichungstag der Anmeldung:
**03.07.85 Patentblatt 85/27**

(45) Bekanntmachung des Hinweises auf die Patenterteilung:
**01.04.87 Patentblatt 87/14**

(84) Benannte Vertragsstaaten:
**BE CH DE FR GB IT LI NL SE**

(56) Entgegenhaltungen:
**EP - A - 0 086 521**
**FR - A - 2 502 418**

(73) Patentinhaber: **Siemens Aktiengesellschaft Berlin und München, Wittelsbacherplatz 2, D-8000 München 2 (DE)**

(72) Erfinder: **Frystacki, Henryk, Dipl.-Ing., Mozartstrasse 9, D-8033 Krailling (DE)**

**Beschreibung**

Die Erfindung betrifft ein Verfahren zur Abschaltung eines Schaltnetzteiles gemäss dem Oberbegriff des Patentanspruches 1.

In neueren Geräten der Kommunikationstechnik werden im allgemeinen zur Stromversorgung Schaltnetzteile, insbesondere primär getaktete Schaltnetzteile, verwendet. Diese sind gegenüber herkömmlichen Netzteilen vorteilhaft, da sie bedeutend weniger Platz benötigen. Schaltnetzteile arbeiten mit einer Frequenz von ca. 20 bis 200KHz, so dass vor allem der Transformator gegenüber einem 50Hz Transformator wesentlich kleiner und leichter ist. Aufbau, Dimensionierung und Wirkungsweisen von Schaltnetzteilen sind in dem Buch «Schaltnetzteile» von Joachim Wüstehube beschrieben.

Bei den eingangs genannten Geräten werden oft mehrere Schaltnetzteile verwendet, die bedarfsweise zur Stromversorgung, beispielsweise bei verschiedenen Betriebszuständen, benützt werden. Es ist allgemein bekannt, diese Schaltnetzteile primärseitig, d.h. die Eingangsspannungsleitungen mit einem Relais schaltbar auszubilden. Ein Relais ist ein mechanisches, dem Verschleiss unterworfenes Bauteil, das zudem relativ viel Leistung für den Schaltvorgang und während des Schaltzustandes benötigt.

Es ist Aufgabe der Erfindung, ein Verfahren zur Abschaltung für ein Schaltnetzteil anzugeben, bei dessen Anwendung die zum Schalten erforderliche Leistung reduziert ist.

Diese Aufgabe wird erfindungsgemäss durch die im kennzeichnenden Teil des Patentspruches 1 angegebenen Merkmale gelöst.

Besonders vorteilhaft bei der Anwendung des erfindungsgemässen Verfahrens bei einem Schaltnetzteil mit einem selbstschwingenden Sperrwandler ist, dass die Schutzklasseforderungen von selbst erfüllt sind.

Weitere Ausgestaltungen der Erfindung sind in den Unteransprüchen gekennzeichnet. So ist vorteilhaft, wenn Steuersignale über einen Steuerübertrager an die, den Schalttransistor ansteuernde Steuerschaltung gegeben werden.

Vorteilhafterweise wird die Wechselspannung von einem Taktgeber abgegeben, der durch den gebräuchlichen Timer-Baustein 555 (z.B. der Firma Siemens) realisiert ist.

Es ist besonders vorteilhaft, zur Simulierung des Kurzschlusses den Taktgeber über einen Transistor gegen ein Bezugspotential zu schalten, wobei der Taktgeber dauernd mit einer Hauptstromversorgungsklemme verbunden ist.

Im folgenden wird die Erfindung anhand eines in der Zeichnung dargestellten Ausführungsbeispieles beschrieben. Dabei zeigen

Fig. 1 ein Blockschaltbild eines selbstschwingenden Sperrwandlers mit der erfindungsgemässen Abschalteinrichtung und,

Fig. 2 Spannungen an einigen Punkten des Sperrwandlers.

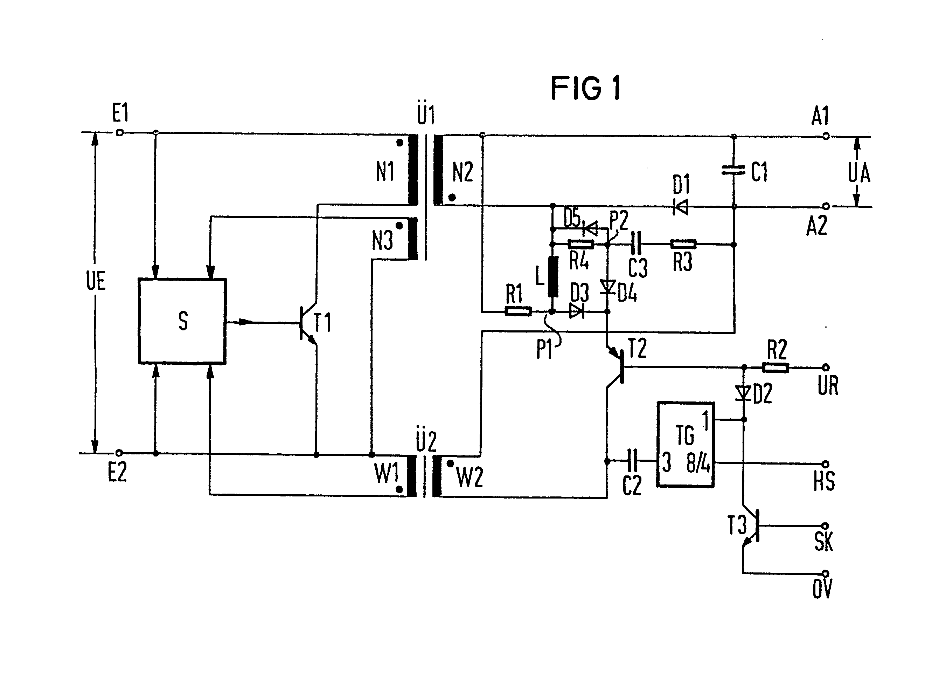

In Fig. 1 ist ein Schaltnetzteil mit einem selbstschwingenden Sperrwandler dargestellt. Dieser weist zwei Eingangsklemmen E1 und E2 auf, an denen eine Eingangsspannung UE anliegt, sowie zwei Ausgangsklemmen A1 und A2, an denen eine Ausgangsspannung UA abgreifbar ist. Der Sperrwandler enthält weiter einen Speicherübertrager Ü1, mit einer Primärwicklung N1, einer Sekundärwicklung N2 und einer Rückkopplungswicklung N3, sowie einen Steuerübertrager Ü2 mit zwei Steuerwicklungen W1 und W2. Die Primärwicklung N1 ist mit der Eingangsklemme E1 und über einen Schalttransistor T1 mit der Eingangsklemme E2 verbunden. Der Schalttransistor T1 wird über seinen Basisanschluss von einer Steuerschaltung S angesteuert. Die Steuerschaltung S ist mit den beiden Eingangsklemmen E1 und E2 verbunden. Die Serienschaltung aus der Rückkopplungswicklung N3 und der Steuerwicklung W1 des Steuerübertragers Ü2 ist mit der Steuerschaltung S verbunden, wobei die Verbindungsleitung zwischen den beiden Wicklungen N3 und W1 mit der Eingangsklemme E2 verbunden ist.

Das eine Ende der Sekundärwicklung N2 des Speicherübertragers Ü1 ist mit der Ausgangsklemme A1, und das andere Ende ist über eine in Sperrichtung gepolte Freilaufdiode D1 mit der Ausgangsklemme A2 verbunden. Zwischen die beiden Ausgangsklemmen A1 und A2 ist ein Glättungskondensator C1 geschaltet.

Weiter ist zur Ansteuerung der Steuerschaltung S sekundärseitig ein sog. Rampengenerator vorgesehen. Hierzu ist das eine Ende der Sekundärwicklung N2 über eine Serienschaltung aus einem Widerstand R1 und einer Spule L mit dem anderen Ende der Sekundärwicklung N2 verbunden. Ein Messpunkt P1, der zwischen dem Widerstand R1 und der Spule L liegt, ist über eine Diode D3 und einen Regeltransistor T2 und die Steuerwicklung W2 des Steuerübertragers Ü2 mit der Ausgangsklemme A2 verbunden. Die Basis des Regeltransistors T2 ist über einen Widerstand R2 mit der Referenzspannungsklemme UR verbunden.

Auf der Sekundärseite des Übertragers Ü1 ist eine Überlastabschaltung vorgesehen. Diese besteht aus einer Serienschaltung, aus einem Widerstand R3, einem Kondensator C3 und einer Parallelschaltung aus einem Widerstand R4 und einer Diode D5. Diese Serienschaltung ist parallel zur Freilaufdiode D1 geschaltet, wobei der Widerstand R3 mit deren Anode, und der Widerstand R4, sowie die Katode der Diode D5 mit deren Katode verbunden ist. Ein Messpunkt P2, der sich zwischen der Parallelschaltung aus dem Widerstand R4 und der Diode D5 und dem Kondensator C3 befindet, ist über eine Diode D4 und ebenfalls über den Regeltransistor T2 und die Steuerwicklung W2 des Steuerübertragers Ü2 mit der Ausgangsklemme A2 verbunden.

Erfindungsgemäss ist als Abschalteinrichtung eine Schaltstufe mit einem Taktgeber TG, einem Koppelkondensator C2, einer Diode D2 und einem Transistor T3 vorgesehen. Der Taktgeber TG ist durch den Timer Baustein 555 der Firma Siemens realisiert. Die äussere Beschaltung dieses Bausteins als stabiler Multivibrator, ist allgemein bekannt und den zugehörigen Datenblättern zu entnehmen.

Der Anschluss 1 des Taktgebers TG, der über die in Sperrichtung gepolte Diode D2 mit der Basis des Regeltransistors T2 verbunden ist, ist über den Transistor T3 gegen ein Bezugspotential OV schaltbar. Die Basis des Transistors T3 ist mit einer Schaltklemme SK verbunden. Die Anschlüsse 4 und 8 des Taktgebers TG sind mit einer Hauptstromversorgungsklemme HS verbunden. An dieser Klemme liegt dauernd eine von einer Hauptstromversorgung gelieferte Spannung an. Der Anschluss 3 ist über den Koppelkondensator C2 mit der Steuerwicklung W2 des Steuerübertragers Ü2 verbunden.

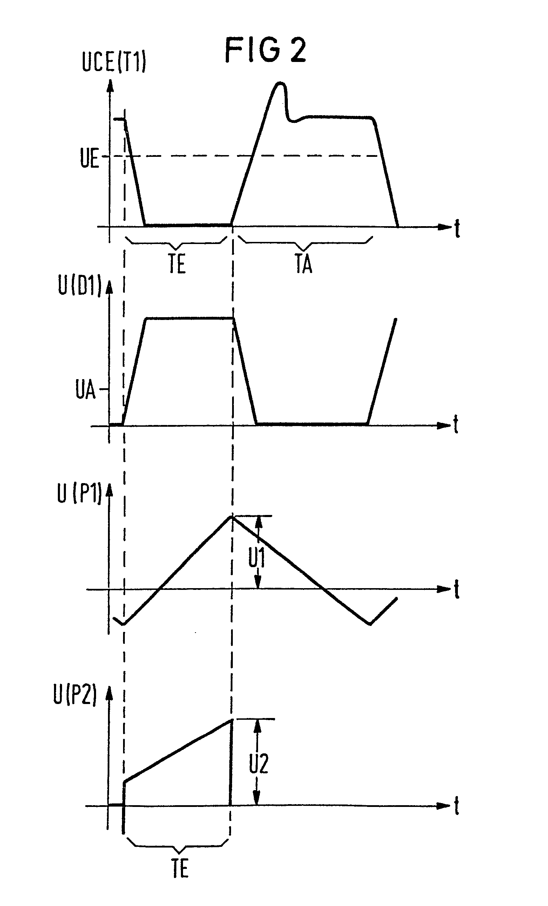

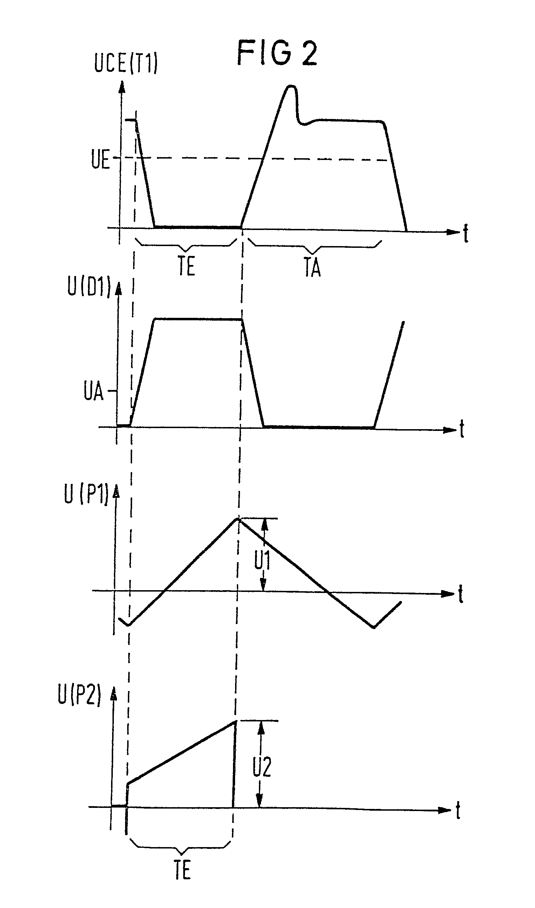

In Fig. 2 sind qualitativ Spannungen an einigen Punkten des in Fig. 1 dargestellten Schaltnetzteils dargestellt. Dies sind im einzelnen eine am Schalttransistor T1 abgreifbare Kollektor-Emitterspannung UCE (T1), eine über der Freilaufdiode D1 abgreifbare Spannung U (D1), eine am Messpunkt P1 abgreifbare Spannung U (P1), sowie eine am Messpunkt P2 abgreifbare Spannung U (P2). Die Kollektor-Emitterspannung UCE (T1) und die über der Freilaufdiode D1 abgreifbare Spannung U (D1) zeigen während einer Einschaltzeit TE und während einer Ausschaltzeit TA des Schalttransistors T1 die an sich bekannte Form für Sperrwandler. Am Messpunkt P1 ist die rampenförmige Spannung U (P1) abnehmbar, deren Maximalwert mit U1 bezeichnet ist. Die am Messpunkt P2 abgreifbare Spannung U (P2) zeigt zu Beginn der Einschaltzeit TE einen steilen Anstieg, der gefolgt wird von einem flacheren Anstieg, der gegeben ist durch die Zeitkonstante aus dem Widerstand R3 und dem Kondensator C3. Am Ende der Einschaltzeit TE fällt die Spannung U (P2) ab. Der Maximalwert dieser Spannung ist mit U2 bezeichnet.

Im folgenden wird die an sich bekannte Wirkungsweise des selbstschwingenden Sperrwandlers ohne die erfindungsgemässe Abschalteinrichtung beschrieben.

Beim Anlegen der gleichgerichteten Netzspannung, d.h. der Eingangsspannung UE an die beiden Eingangsklemmen E1 und E2, wird der Schwingungsvorgang des selbstschwingenden Sperrwandlers gestartet. Dazu schaltet die Steuerschaltung S den Schalttransistor T1 leitend, und der Strom in der Primärwicklung N1 des Speicherübertragers Ü1 steigt linear an. Die Induktionsspannung der Rückkopplungswicklung N3 ist so gepolt, dass der Basisstrom der Schalttransistors T1 ansteigt und diesen in die Sättigung bringt. Die in der Sekundärwicklung N2 induzierte Spannung sperrt die Freilaufdiode D1 und bewirkt in der Serienschaltung aus dem Widerstand R1 und der Spule L einen rampenförmigen Stromverlauf bzw. am Messpunkt P1 einen rampenförmigen Spannungsverlauf [siehe U (P1) in Fig. 2].

Solange die an den Ausgangsklemmen A1 und A2 abgreifbare Ausgangsspannung UA kleiner ist als eine an der Referenzspannungsklemme UR anliegende Referenzspannung, steigt der Strom in der Primärwicklung N1 an, bis durch Nichtlinearitäten der Anstieg des magnetischen Flusses im Speicherübertrager Ü1 unterbrochen wird. Diese Nichtlinearitäten werden beispielsweise dadurch bewirkt, dass der Schalttransistor T1 aus der Sättigung kommt, dass der Kern des Speicherübertragers Ü1 in die Sättigung kommt, oder dass der Anstieg des magnetischen Flusses im Speicherübertrager Ü1 unterbrochen wird. Infolge eines dieser Faktoren sinkt die Induktionsspannung der Rückkopplungswicklung N3 und schaltet den Schalttransistor T1 über die Steuerschaltung S aus. Hierdurch wird bewirkt, dass die Kollektorspannung des Schalttransistors T1 ansteigt, bis die in der Sekundärwicklung N2 induzierte Spannung die Freilaufdiode D1 leitend schaltet. Die im Magnetfeld des Speicherübertragers Ü1 gespeicherte Energie fliesst über die Freilaufdiode D1 in den Kondensator C1 und die Ausgangsspannung UA steigt an. Wenn der magnetische Fluss im Speicherübertrager Ü1 den Wert Null erreicht, wird über die Rückkopplungswicklung N3 und die Steuerschaltung S der Schalttransistor T1 wieder eingeschaltet, und ein neuer Schwingungszyklus beginnt.

Die Regelung der Ausgangsspannung UA erfolgt über den Regeltransistor T2, der in Abhängigkeit von der an der Referenzspannungsklemme UR anliegenden Referenzspannung die Spannung U (P1) am Messpunkt P1 an die Steuerwicklung W2 des Steuerübertragers Ü2 gibt. Die rampenförmige Spannung U (P1) induziert während der Einschaltzeit TE des Schalttransistors T1 über die Steuerwicklung W2 in der Steuerwicklung W1 einen Strom, Dieser steigt, bis er einen Schwellwert erreicht hat, so dass von der Steuerschaltung S der Schalttransistor T1 ausgeschaltet wird.

Die während der Leitendphase des Schalttransistors T1 vom Speicherübertrager Ü1 aufgenommene Energie ist gerade so gross, wie die zum Aufrechterhalten der Ausgangsspannung UA benötigte Energie, die während der Sperrphase des Schalttransistors T1 über die Freilaufdiode D1 an den Glättungskondensator C1 abgegeben wird.

Die Maximalspannung U2 der am Messpunkt P2 abgreifbaren Spannung U (P2) ist eine Funktion der Einschaltzeit TE und damit eine Funktion der an den Ausgangsklemmen A1 und A2 abnehmbaren Leistung. Bei Überschreitung einer maximalen Abgabeleistung wird die Abschaltung des Schalttransistors T1 nicht mehr von der am Messpunkt P1 abgreifbaren Spannung U (P1) bewirkt, sondern von der am Messpunkt P2 abgreifbaren Spannung U (P2). In diesem Fall ist die Maximalspannung U2 grösser als die Maximalspannung U1 (siehe Fig. 2).

Im folgenden wird die Wirkungsweise der erfindungsgemäss vorgesehenen Abschalteinrichtung beschrieben.

Der Erfindung liegt der Gedanke zugrunde, dass durch die Abschalteinrichtung der Steuerschaltung S des selbstschwingenden Sperrwandlers ein sekundärseitiger Kurzschluss vorgetäuscht, und ein Wiederanlauf des Schwingungsvorganges während des Kurzschlussverhaltens unterdrückt wird. Im einzelnen wird dies durch folgenden Funktionsablauf bewirkt.

Über den Hauptstromversorgungsanschluss HS ist der Taktgeber TG dauernd an eine Hauptstromquelle angeschlossen. Bei Anlegen eines entsprechenden Signals an die Schaltklemme SK, beispielsweise eines TTL-gerechten Signals, wird über den Transistor T3 der Taktgeber TG mit dem Bezugspotential OV verbunden. Hierdurch wird bewirkt, dass eine Wechselspannung vom Taktgeber TG über den Koppelkondensator C2 in die Steuerwicklung W2 des Steuerübertragers Ü2 eingekoppelt werden. Weiter wird über den Transistor T3 die Basis des Regeltransistors T2 über die Diode D2 gegen das Bezugspotential OV geschaltet.

Die vom Taktgeber TG abgegebene Wechselspannung kann sinus- oder sägezahnförmig sein. Sie verhindert ein Wiedereinschalten des Schalttransistors T1.

Die Verwendung des gebräuchlichen Timer-Bausteins 555 (z.B. der Firma Siemens) als Taktgeber TG, sowie die schaltbare Verbindung zum Bezugspotential OV haben den Vorteil, dass im normalen Betrieb der Taktgeber TG keinen Einfluss auf den Sperrwandler ausübt.

Die vom Taktgeber TG abgegebene Wechselspannung kann erfindungsgemäss ohne einen zwischengeschalteten Steuerübertrager Ü2 an die Steuerung S gegeben werden.

Weiter ist eine Verwendung des erfindungsgemässen Gedankens bei anderen Wandlertypen möglich.

*Bezugszeichenliste*

| | |
|---|---|
| E1, E2 | Eingangsklemmen |
| UE | Eingangsspannung |
| A1, A2 | Ausgangsklemmen |
| UA | Ausgangsspannung |
| Ü1 | Speicherübertrager |
| N1 | Primärwicklung |
| N2 | Sekundärwicklung |
| N3 | Rückkopplungswicklung |
| Ü2 | Steuerübertrager |
| W1, W2 | Steuerwicklungen |
| T1 | Schalttransistor |
| S | Steuerschaltung |
| D1 | Freilaufdiode |
| D2-D5 | Diode |
| C1 | Glättungskondensator |
| C2 | Koppelkondensator |
| R1-R42 | Widerstände |
| T2 | Regeltransistor |
| T3 | Transistor |
| L | Spule |
| SK | Schaltklemme |
| OV | Bezugspotential |
| HS | Hauptstromversorgungsklemme |
| UR | Referenzspannungsklemme |
| TG | Taktgeber |
| P1, P2 | Messpunkte |
| C3 | Kondensator |
| U1, U2 | Spannungen |

**Patentansprüche**

1. Verfahren zur Abschaltung eines Schaltnetzteils mit einem Schalttransistor (T1) und einer diesen ansteuernden Steuerschaltung (S), dadurch gekennzeichnet, dass an die Steuerschaltung (S) ein, einen sekundärseitigen Kurzschluss simulierendes und den Wiederanlauf des Schaltnetzteils unterdrückendes Steuersignal gegeben wird.

2. Abschalteinrichtung zur Durchführung des Verfahrens nach Anspruch 1 für ein Schaltnetzteil mit einem selbstschwingenden Sperrwandler, der zur Übertragung von Steuersignalen an die den Schalttransistor (T1) ansteuernde Steuerschaltung (S) einen Steuerübertrager (Ü2) aufweist, gekennzeichnet durch eine Schaltstufe (Taktgeber TG, Transistor T3), die eine, einen sekundärseitigen Kurzschluss simulierende und den Wiederanlauf des Schaltnetzteils unterdrückende Wechselspannung an die Steuerschaltung (S) gibt.

3. Abschalteinrichtung nach Anspruch 2, dadurch gekennzeichnet, dass die Wechselspannung über den Steuerübertrager (Ü2) an die Steuerschaltung (S) gegeben wird.

4. Abschalteinrichtung nach Anspruch 2 oder 3, dadurch gekennzeichnet, dass die Schaltstufe einen Taktgeber (TG) aufweist, der die Wechselspannung an die Steuerwicklung (W2) des Steuerübertragers (Ü2) abgibt.

5. Abschalteinrichtung nach Anspruch 4, dadurch gekennzeichnet, dass der Taktgeber (TG) mit einer Hauptstromversorgungsklemme (HS) verbunden ist, dass er über einen Transistor (T3) an ein Bezugspotential (OV) schaltbar ist, und dass während des Sperrzustandes des Transistors (T3) der Taktgeber (TG) das Schaltnetzteil nicht beeinflusst.

6. Abschalteinrichtung nach Anspruch 5, dadurch gekennzeichnet, dass der Transistor (T3) über eine Schaltklemme (SK) durch eine TTL-gerechte Spannung ansteuerbar ist.

**Claims**

1. A method of disconnecting a switch-mode power supply unit having a switching transistor (T1) and a control circuit (S) which drives said transistor, characterised in that the control circuit (S) is supplied with a control signal which simulates a short-circuited secondary and suppresses any restart of the switch-mode power supply unit.

2. A disconnecting device for implementing the method claimed in Claim 1, for a switch-mode power supply unit having a self-oscillating flyback converter which is equipped with a control transformer (Ü2) to transmit control signals to the control circuit (S) which drives the switching transistor (T1), characterised by a switching stage (clock signal generator TG, transistor T3) which supplies the control circuit (S) with an alternating voltage which simulates a short-circuited secondary and suppresses any restart of the switch-mode power supply unit.

3. A disconnecting device as claimed in Claim 2, characterised in that the alternating voltage is fed via the control transformer (Ü2) to the control circuit (S).

4. A disconnecting device as claimed in Claim 2 or 3, characterised in that the switching stage comprises a clock signal generator (TG) which emits the alternating voltage to the control winding (W2) of the control transformer (Ü2).

5. A disconnecting device as claimed in Claim 4, characterised in that the clock signal generator (TG) is connected to main current supply terminal (HS), that it can be connected via a transistor (T3) to a reference potential (OV), and that during the blocking state of the transistor (T3) the clock signal generator (TG) does not influence the switch-mode power supply unit.

6. A disconnecting device as claimed in Claim 5, characterised in that the transistor (T3) can be driven via a switching terminal (SK) by a voltage which conforms with TTL.

## Revendications

1. Procédé pour couper une alimentation dite commutée, comprenant un transistor commutateur (T1) et un circuit de commande (S) attaquant celui-ci, caractérisé en ce que l'on applique, au circuit de commande (S), un signal pilote qui simule un court-circuit du côté secondaire et supprime le redémarrage de l'alimentation commutée.

2. Dispositif d'interruption pour la mise en oeuvre du procédé selon la revendication 1 sur une alimentation commutée avec un convertisseur de blocage auto-oscillant, présentant un transformateur de commande (Ü2) pour la transmission de signaux pilotes au circuit de commande (S) attaquant le transistor commutateur (T1), caractérisé par un étage de commutation (horloge TG, transistor T3) qui délivre au circuit de commande (S) une tension alternative simulant un court-circuit du côté secondaire et supprimant le redémarrage de l'alimentation commutée.

3. Dispositif selon la revendication 2, caractérisé en ce que la tension alternative est délivrée au circuit de commande (S) à travers le transformateur de commande (Ü2).

4. Dispositif selon la revendication 2 ou 3, caractérisé en ce que l'étage de commutation comporte une horloge (TG) qui délivre la tension alternative à l'enroulement de commande (W2) du transformateur de commande (Ü2).

5. Dispositif selon la revendication 4, caractérisé en ce que l'horloge (TG) est connectée à une borne d'alimentation principale (HS), qu'elle peut être connectée à travers un transistor (T3) à un potentiel de référence (OV) et que, pendant l'état de blocage de ce transistor (T3), l'horloge (TG) n'influence pas l'alimentation commutée.

6. Dispositif selon la revendication 5, caractérisé en ce que le transistor (T3) peut être commandé par une tension, appliquée à une borne de commutation (SK), qui convient à une logique avec un transistor à plusieurs émetteurs.

FIG 1

# FIG 2

FIG 2